(19)

Europäisches
Patentamt

European
Patent Office

Office européen
des brevets

(11) **EP 2 409 284 B1**

(12) **EUROPEAN PATENT SPECIFICATION**

(45) Date of publication and mention
of the grant of the patent:
**05.07.2017 Bulletin 2017/27**

(51) Int Cl.:
***G08C 17/02*** *(2006.01)*　　***G08C 23/04*** *(2006.01)*
***G06F 1/32*** *(2006.01)*

(21) Application number: **10712530.4**

(86) International application number:
**PCT/IB2010/051091**

(22) Date of filing: **15.03.2010**

(87) International publication number:
**WO 2010/106476 (23.09.2010 Gazette 2010/38)**

(54) **SYSTEM FOR CONTROLLING A DEVICE**

SYSTEM ZUR STEUERUNG EINES GERÄTES

SYSTÈME DE COMMANDE D'UN DISPOSITIF

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **18.03.2009 EP 09155503**

(43) Date of publication of application:
**25.01.2012 Bulletin 2012/04**

(73) Proprietor: **Philips Lighting Holding B.V.
5656 AE Eindhoven (NL)**

(72) Inventor: **HILGERS, Achim
NL-5656 AE Eindhoven (NL)**

(74) Representative: **van Eeuwijk, Alexander Henricus
Waltherus et al
Philips Lighting B.V.
Philips Lighting Intellectual Property
High Tech Campus 45
5656 AE Eindhoven (NL)**

(56) References cited:
**EP-A1- 1 857 911　　US-A1- 2006 101 298
US-A1- 2007 124 615　　US-A1- 2007 139 214**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD OF THE INVENTION

The invention describes a system for, and a method of, controlling a device by sending a control signal to the device via a repeater unit. The invention also describes a repeater unit and a remote control interface unit.

BACKGROUND OF THE INVENTION

Many consumer electronics devices available today can be controlled remotely by using a wireless remote control unit, usually hand-held. A user can easily select desired functions of the device by, for example, pressing an appropriate button or sequence of buttons on the remote control unit. Some remote control units can be programmed to be able to control several electronic devices, for example a "universal" remote control unit can be used to control a television, a CD-player, a satellite receiver, etc. US 2007/0139214 A1 describes a system in which remote control units are not 'tied' to specific devices, but can obtain remote control commands for any device from a master controller.

Control signals issued by the remote control device for detection by the controlled device can be infrared signals or radio-frequency signals. Usually, the power source of a remote control device is a battery or a battery pack. A remote control unit should be small enough and light enough to be able to be comfortably held while in use. For ease of use, therefore, the power source of the remote control should also be light in weight. Such limitations in size may also place restrictions on the signal strength that can be generated by the remote control unit. This in turn can limit the range in which the remote control unit can communicate with a device.

The use of a repeater is known to 'relay' a signal from a source to a target when the source and target are too far apart to communicate directly. However, known repeater units require separate power supplies, whether from the mains or from a battery, and would therefore only add to the overall power consumption. Since many users of consumer devices are becoming aware of the negative impact on the environment caused by energy over-consumption and would prefer to reduce the amount of unnecessary power dissipation, it may be expected that the additional power consumption of such a prior-art repeater would be regarded as unacceptable. Even a repeater unit with a standby mode of operation may be unacceptable to many consumers, since awareness of the need to reduce power consumption, even standby mode power, is increasing. EP 1 857 911 A1 describes a device with a wake-up unit for detecting a wake-up signal and connecting a main unit of the device to a power supply. US 2006/0101298 A1 also describes a device with a wake-up unit, in which an amplifier listens for a signal. When a wake-up signal is detected, the device is connected to a power supply and the amplifier is disconnected from the power supply. While listening for the wake-up signal, however, the amplifier continually draws current from the power supply.

Therefore, it is an object of the invention to provide a way of remotely controlling a device outside the range of a remote control unit, while avoiding the problems mentioned above.

SUMMARY OF THE INVENTION

The object of the invention is achieved by a system for controlling a device according to claim 1, by a repeater unit according to claim 6, and by a method of controlling a device according to claim 10.

The system according to the invention comprises a remote control unit for transmitting a signal in the form of electromagnetic radiation, a repeater unit, and a device to be controlled. According to the invention, the repeater unit comprises a detector for detecting electromagnetic radiation to obtain a repeater receive signal, a first signal conversion unit for passively converting the repeater receive signal into a repeater switch-actuating signal for actuating a first switch to switch the repeater unit between an inactive mode, in which the repeater unit is completely disconnected from a first power supply so that no current is drawn by the repeater unit, and an operating mode, in which current is drawn from the first power supply by the repeater unit, a signal module powered by the first power supply to generate a repeater transmit signal on the basis of the repeater receive signal, and a repeater transmit interface for transmitting the repeater transmit signal in the form of electromagnetic radiation. In the system according to the invention, the device to be controlled comprises a remote control interface module for detecting the electromagnetic radiation transmitted by the repeater transmit interface to obtain a device receive signal, which device receive signal is subsequently used as a basis for controlling the device.

A 'device' in the sense used here can be any electronic device which responds to a suitable control signal, for example any remote-controllable consumer electronics device, household appliance, lighting fixture, etc.

In the system according to the invention, the electromagnetic radiation is automatically detected in the repeater unit in an entirely passive manner by the detector or detecting antenna, which is caused to resonate by the energy in the electromagnetic radiation, giving the repeater receive signal. Also, the conversion of this AC electrical signal into a DC repeater switch-actuating signal is performed in an entirely passive manner, i.e. by using electrical components that do not require a power supply. An advantage of a system using a repeater for the signal transmission is that the remote control unit used to activate or deactivate a device can be located well outside of its range of transmission, since the repeater unit detects the signal intended for the device and retransmits this signal. Furthermore, the remote control unit does not have to be held in a "line of sight" of the device, since the repeater unit can obviously retransmit the signal in any direction. A particular advantage of the system according to the invention is that, when the repeater is deactivated, it is completely disconnected from its power supply, in a true 'zero-power' state, and is not merely in the low-power mode of operation, known in state-of-the-art devices, that is usually referred to as 'standby mode'. According to the invention, the repeater is entirely quiescent when turned off, since it does not draw any current and does not consume any power, so that an obvious advantage of the system according to the invention is the saving in energy that can be obtained while favourably increasing the range of the remote control unit. Another advantage is that the repeater can still be reactivated by the remote control, so that convenience and ease of use are not compromised in any way. Altogether, this permits a convenient and comfortable way of controlling one or more devices even if the devices are outside of the range of the remote control unit, without significantly adding to the overall power consumption of the system.

According to the invention, a repeater unit for transmitting a signal from a remote control unit to a device to be controlled comprises a detector for detecting electromagnetic radiation to obtain a repeater receive signal, and a first signal conversion unit for passively converting the repeater receive signal to obtain a repeater switch-actuating signal. The purpose of the repeater switch-actuating signal is to switch the repeater unit between an inactive mode, in which the repeater unit is completely disconnected from a repeater power supply so that no current is drawn by the repeater unit, and an operating mode, in which current is drawn from the repeater power supply by the repeater unit. The repeater unit according to the invention also comprises a signal module powered by the repeater power supply to generate a repeater transmit signal on the basis of the repeater receive signal, and a repeater transmit interface for transmitting the repeater transmit signal in the form of electromagnetic radiation.

A method according to the invention of controlling a device comprises the steps of transmitting a control signal from a remote control unit in the form of electromagnetic radiation, detecting the electromagnetic radiation with a repeater receive interface in a repeater unit to obtain a repeater receive signal, passively converting the repeater receive signal into a repeater switch-actuating signal, and actuating a repeater switch of the repeater unit using the repeater switch-actuating signal to switch the repeater unit between an inactive mode, in which the repeater unit is completely disconnected from a repeater power supply so that no current is drawn by the repeater unit, and an operating mode, in which current is drawn from the repeater power supply by the repeater unit. The method according to the invention further comprises the step of using the repeater power supply to drive a signal module of the repeater unit on the basis of the repeater receive signal to generate a repeater transmit signal, and the step of transmitting the repeater transmit signal in the form of electromagnetic radiation by means of a repeater transmit interface of the repeater unit. In the method according to the invention, the electromagnetic radiation transmitted by the repeater transmit interface is detected in a remote control interface module of the device to be controlled to obtain a device receive signal, which device receive signal is used as a basis upon which to control the device.

The dependent claims and the subsequent description disclose particularly advantageous embodiments and features of the invention.

In a particularly preferred embodiment of the invention, the passive conversion unit of the repeater unit comprises a passive rectifier circuit, so that the AC electrical signal induced at the detector, or receiving antenna, is converted into a DC signal without the use of any active components. The passive rectifier circuit described here can therefore simply comprise passive components such as, for example, a high-frequency diode in conjunction with a capacitor to produce a smoothed DC switch-actuating signal, whose signal strength is sufficient to actuate a sensitive electrical switch. In this way, a signal transmitted by the remote control unit can be converted, in an entirely passive manner, into a repeater switch-actuating signal in order to connect the functional units or modules of the repeater to the repeater power supply.

Technological developments in recent years have led to better and more sensitive electrical switches, for example a MEMS (microelectromechanical systems) switch, which can be switched using a signal of very low strength. Such switches do not require boosters, for example operational amplifiers, unlike state-of-the-art switches. Therefore, in one embodiment of the invention, the repeater switch comprises a MEMS switch which can be switched by the low-strength repeater switch-actuating signal. Alternatively, the repeater switch-actuating signal could switch a CMOS FET between a repeater power supply and the repeater unit. The capabilities of such switches are known to a person skilled in the art and need not be explained in further detail here.

The advantages of being able to effect a complete connection to or disconnection from a power supply by means of a remotely transmitted signal is not limited to the repeater unit. Evidently, any device controllable by the remote control unit could also enjoy the advantages of a complete disconnection from power, when not in use. In a preferred embodiment of the invention, therefore, the remote control interface unit of the device to be controlled comprises a passive signal conversion unit and a device power switch. The device receive signal can therefore be passively converted into a switch-actuating signal and the device power switch can be actuated using the switch-actuating signal to switch the device between an operating mode, in which current is drawn from the device power supply by the device during operation, and an inactive mode, in which the device is completely disconnected from the device power supply so that no current is drawn by the device. The passive signal conversion in the remote control interface unit can be effected in the same way as described above, using passive circuit components to obtain a device switch-actuating signal. The device power switch of the remote control interface unit can therefore preferably be switched or actuated by the device switch-actuating signal to switch the device to be controlled between an operating mode, in which current is drawn by the device during operation, and an inactive mode, in which the device to be controlled is completely disconnected from a device power supply so that no current is drawn by that device. Again, the device power switch can be a MEMS switch as described above, or a CMOS FET. Alternatively, in a further practical embodiment of the invention, an optoisolator or optocoupler, for instance comprising a LED as light source and a phototransistor or phototriac as sensor, can be used as a device power switch between the signal conversion unit of the remote control interface and the device, since an optoisolator has the favourable advantage of electrically isolating the signal conversion unit from the device.

As already indicated, a user can control a device in the usual manner by, for example, pressing one or more appropriate buttons on a remote control unit. Therefore, in a further preferred embodiment of the invention, the remote control unit comprises a user interface for inputting a control input and a signal generator for generating a control signal according to the control input. In one possible realisation, for example, the remote control unit could comprise a dedicated on/off button for transmitting a specific signal to the repeater unit in order to cause the repeater unit to be connected to or disconnected from its power supply, and any other buttons or interaction means on the user interface of the remote control unit can be assigned in the usual manner to the device functions. However, since any electromagnetic radiation of sufficient strength can serve to activate the repeater unit, such a dedicated on/off button is not explicitly necessary, and the principle of operation of the repeater unit may simply be to be activated (if previously deactivated) upon detection of any repeater receive signal. The detected signal is then simply retransmitted by the repeater transmit antenna which has been connected to the repeater power supply. The advantage of such a realisation may be that the system according to the invention can find application using already existing remote control units and corresponding devices.

Many known remote control units communicate with a device to be controlled by means of an infrared interface, as mentioned above. These remote control units require the device to be in the line of sight in order for the communication to be successful. The system and method according to the invention can still be used with such a remote control unit in order to activate a device that has been disconnected from its power supply, as described above. Such a remote control unit is therefore preferably equipped with an additional interface capable of generating a radio-frequency signal that can be detected by a repeater unit and then retransmitted to the device with a corresponding infra-red remote control interface module. For example, a remote control unit with an additional radio-frequency signal generator and transmit antenna can be used to issue a 'wake-up' signal, which may be of low signal strength, for detection by a repeater unit, which in turn relays the wake-up signal to the intended device. Once the device power switch has been actuated to connect the device to its power supply, the remote control unit can be used to communicate with the now operational device by means of the infrared interface. However, in another realisation of the invention, the repeater unit could also comprise an infrared interface to extend the range between a remote control unit and one or more devices which are controlled by means of infrared control signals. Such a repeater unit is preferably equipped with a suitable infrared interface for receiving and relaying infrared signals. The repeater unit may also comprise an amplifier for increasing the signal strength of the infrared control signals before retransmitting them, thus extending even further the range of interaction between remote control unit and device. Since a beam of infrared radiation is preferably directed at the device so that it can be correctly received, the repeater unit according to the invention, in this realisation, can preferably be configured to transmit in the direction of a device to be controlled. Such a configuration step can be carried out manually, for example by a user. Alternatively, for more ease of use, the repeater unit can comprise a lens such as a fractal lens or a Fresnel lens for spreading the infrared signal over a wider area, thus allowing a plurality of devices to be controlled.

More recently, remote control units with radio-frequency interfaces are used to control consumer electronics devices. This type of remote control does not require a line-of-sight connection, so that, in the system and method according to the invention, a far greater range can be achieved compared to infrared-based devices. Here, the repeater unit not only relays a wake-up signal to the device, but can be used to relay any control signal issued by the remote control unit and intended for the device, according to the user input. A remote control unit does not necessarily have to be a hand-held device, but can be part of a fixture, for example a wall-mounted wireless control in a ZigBee arrangement.

Evidently, with such remote control units, the system according to the invention is not limited to the use of a single repeater unit. For instance, a series of repeater units can be located between the remote control unit and a device to be controlled. This allows the user of the remote control unit to freely move about while still being able to remotely control the device. The repeater units are arranged so that a signal originating from a remote control unit or from a repeater unit can be detected by the nearest repeater unit, which in turn retransmits the signal.

In a ZigBee environment or an environment based on a similar standard, for example, separate physical entities can combine the functionalities of remote control unit, repeater unit, and device. For example, a single physical entity can be a device with one or more device functions, and can also include a repeater unit to forward control signals originating from a remote control unit to another repeater unit or another device. A possible realisation might be a number of lighting fixtures controllable in such an environment, wherein each of a number of the lighting fixtures - which may be regarded as 'devices' - comprises a repeater unit for forwarding control signals to an intended recipient device.

In a simpler realisation of the system according to the invention, a home entertainment system can comprise a CD player located centrally, with loudspeaker arrangements located in different rooms or on different floors. A user can control the home entertainment system from any room, using a remote control unit. A number of repeater units located favourably can detect and retransmit a control signal originating from the remote control unit. The repeater unit closest to the device - in this case the CD player - 'delivers' the control signal to the remote control interface unit of the device. In this way, the user can comfortably control a device located at any distance.

When the repeater unit is used to forward or relay a signal issued by the remote control unit, the signal itself can be forwarded essentially unchanged. However, to better ensure that the signal can be detected by the intended device, the signal strength may be increased. Therefore, in a further embodiment of the invention, the repeater signal module of the repeater unit preferably comprises an amplifier for amplifying the repeater receive signal to yield the repeater transmit signal. In such an embodiment, the repeater transmit signal, being of greater signal strength, may be better detected by the device, thus allowing a greater distance to be covered.

As already indicated above, one particular advantage of the passive signal detection and conversion in combination with the described actuating switches is that an electronic device, such as the repeater unit, can be entirely disconnected from its power supply when not in use. This deactivation could take place upon detection of a suitable signal issued by, for example, the remote control unit. However, this would require specification of such a signal and use of dedicated circuitry to recognise the signal in the repeater receive signal. In a particularly preferred embodiment of the invention, therefore, the repeater unit comprises a timer module for providing a time-related output signal after a predefined time duration elapses after detection of a repeater receive signal, and for controlling the repeater switch-actuating signal to switch the repeater unit into an inactive mode, in which the repeater unit is completely disconnected from a repeater power supply so that no current is drawn by the repeater unit. Each time a repeater receive signal is detected, a timer or counter can be triggered. Once the counter or timer reaches a predefined value, for example a value corresponding to five minutes, half an hour, or any suitable value, the repeater switch-actuating signal can be driven to disconnect the repeater unit from the repeater power supply. In this way, the user does not have to carry out any additional steps for the repeater unit to be deactivated. Alternatively, in a further embodiment, the functionality of the timer module can be combined with a state-of-the-art type of 'standby' mode of operation, so that, in the intervals between control signals, when the timer module is counting the elapsed time, other circuitry of the repeater unit can be placed on 'standby' so that that circuitry only draws a minimal amount of current while 'waiting' for a next control signal to relay. When another repeater receive signal is detected while the timer is still counting, this causes the circuitry to resume its 'normal' operation, i.e. to relay the control signal. Should the predefined length of time elapse without any repeater receive signal being detected, then the timer module can control the repeater switch, as already described above, to switch the repeater unit into a zero-power state.

To provide a user with feedback, a repeater unit can be equipped with an LED which lights up whenever the repeater unit is activated, i.e. whenever the circuit modules of the repeater unit are connected to its power supply. In this way, the user can be assured that the repeater unit is functioning. When the repeater power supply is disconnected again, for example after a predefined length of time has elapsed, the LED is then also automatically turned off.

In order to minimise interference between devices that exchange wireless signals, wireless communication is governed by standards that, among others, assign the frequency bands to be used by different types of devices. For example, wireless communication in a local or personal area network (LAN or PAN), with ranges of up to 100 meters, can be effected in an ISM (International Scientific and Medical) frequency band. Therefore, in a particularly preferred embodiment of the invention, the electromagnetic signals generated by the remote control unit and retransmitted by the repeater unit comprise high-frequency signals whose frequency lies in an ISM frequency band. Several such bands are available, with centre frequencies at 2.45 GHz, 915 MHz, or 5.8 GHZ.

Other frequency bands can be used, depending on the application in which the system according to the invention is being used, or on the distances between repeater units and devices. For example, the repeater units of the system can be realised to operate at a frequency compatible with short-range (Bluetooth), medium-range (ZigBee) or even long-range communications systems (DECT, GSM) applications. Appliances intended for use in such environments can easily be augmented with the 'zero-power' functionality according to the system and method described herein, so that the overall power consumption in such environments can be favourably reduced by allowing the appliances to be switched off into a true 'off' state and to be switched on again by remote control.

The radio-frequency signal generated in the remote control unit can be continuously generated, i.e. as a continuous signal without interruption. In a preferred embodiment of the invention, however, the signal comprises a pulsed high-frequency signal, i.e. the signal generator of the remote control unit outputs a series of high-frequency pulses, perhaps with the aid of a suitable capacitor, as will be known to a person skilled in the art. One advantage of this technique is that the lifespan of a battery powering the signal generator is prolonged. More importantly, pulsing allows the energy, i.e. the amplitude, of the electrical signal to effectively be increased, so that the reliability of the switching process is improved. At the same time, it can be ensured that an overall average energy value of the signal is not exceeded, so that the signal satisfies safety standards. Also, this technique allows the signal range to be increased. Again, the signal generated in this way can be of a predefined duration, or may be generated as long as the user carries out the appropriate action with the remote control unit. A repeater unit according to the invention is preferably realised to retransmit such a pulsed signal. For example, the signal can be retransmitted without modification by the repeater unit, or may be amplified as described above.

In a particularly preferred embodiment of the invention, therefore, regardless of the nature of the repeater receive signal, the information content of a repeater transmit signal corresponds to the information content of the repeater receive signal. In other words, the signal module is realized such that any information contained in the repeater receive signal will be forwarded in the repeater transmit signal. For example, any device identifier, device code, modulation information, etc. encoded in the repeater receive signal is preferably also encoded in the repeater transmit signal.

As already indicated above, the system and method according to the invention can be employed to allow a user to control a plurality of devices. Hand-held remote control units are available for controlling a plurality of devices, for example a user can choose whether a command is to be directed at a television, a satellite receiver, etc. Such a remote control unit may generate control signals modulated at different frequencies, wherein a distinct frequency is associated with a specific device. Alternatively, control signals for different devices may comprise carrier signals modulated to carry device identification information, such as a device identification code, for the device to be controlled. Such a device identification code may be, for example, a type of RFID (radio-frequency identifier) code, with which the skilled person will be familiar. Such a means of identification can be advantageous when several devices are controlled by remote control units using the method according to the invention, or, more particularly, when a single remote control unit is used to control more than one device. In such a case, the remote control unit can be equipped with different buttons for addressing the different devices, and for each device that is activated or deactivated with this remote control unit, the actuating switch is opened or closed on the basis of the device identification information. In a further preferred embodiment of the invention, therefore, a receive signal is decoded to determine a device identification code, and a device power switch is actuated on the basis of that device identification code. For example, the signal forwarded by the repeater may be received by the remote control interface units of a number of devices, but only the device power switch of the device for which the signal was intended will indeed be actuated.

Taking this concept further, the system according to the invention can allow for "intelligent" forwarding of device control signals. This may be advantageous in systems using a plurality of repeater units and many devices that can be controlled, similar to ZigBee systems. The devices can be lighting fixtures, electronic door locks, ventilators, etc., for example in an office building. In such a scenario, a repeater unit according to the invention is preferably realised to only retransmit a device control signal if the device for which the device control signal is intended lies in the range of the repeater unit. The 'range' of the repeater unit can be its range of transmission, but can also be its 'logical range'. For example, in a ZigBee or similar environment, a repeater unit may choose not to forward a detected signal if the device for which the signal is intended cannot be reached by that repeater unit. To this end, repeater units of the system can be configured in an initial configuration step so that each repeater unit "knows" which devices are located within its range of transmission. A signal detected by a repeater unit is then decoded, and only retransmitted if a device code in the signal indicates that the signal is intended for a device within the range of the repeater unit. In such a system, it is conceivable that the device control signals are not issued from a simple hand-held remote control unit, but may be generated by a system controller, for example using a computer connected to a radio-frequency transmitter.

As already indicated, the device control signal is originally generated in the remote control unit and transmitted by its transmit antenna. The simplest type of antenna radiates in all directions, so that the energy of the signal being transmitted is also distributed in all directions. It follows that only a small fraction of the signal energy arrives at the detecting antenna, in this case the receive antenna of the repeater unit. Such a signal would therefore have to be of sufficient amplitude in order to be reliably detected. An example of such a simple antenna is the dipole antenna. However, the range of a wireless signal can be increased when a directional antenna is used, as will be known to a person skilled in the art. Examples of state-of-the-art antennae suitable for use in short-range wireless communication are patch antennae or micropatch antennae. Alternatively, a phased-array antenna could be used, for example as described in WO 2005/086281 A1. In the system according to the invention, therefore, the transmitting antenna of the remote control unit can comprise a directional antenna, so that the energy of the signal being transmitted is essentially focussed in one main direction. The user only needs to aim the remote control unit in the general direction of the (nearest) repeater unit in order for the signal to be reliably detected by the repeater unit.

In a further preferred development, radiation characteristics of a transmit antenna are matched to radiation characteristics of a receive antenna. This applies to transmit/receive antenna pairs for remote control unit/repeater unit; repeater unit/repeater unit; and repeater unit/device to be controlled. In one or more such antenna pairs in a system according to the invention, radiation characteristics of a transmit antenna are matched to radiation characteristics of the corresponding receive antenna, such that electromagnetic radiation originating from the transmit antenna is optimally detected by the corresponding receive antenna. For example, the radiation characteristics can comprise polarisation characteristics which are then matched in a transmit/receive antenna pair.

A repeater unit according to the invention has a receive as well as a transmit functionality. Basically, the repeater unit retransmits the same signal that it receives. Therefore, in a further preferred embodiment of the invention, the repeater unit comprises one antenna shared between the receive and transmit functions. To allow the repeater unit to essentially simultaneously receive a signal and retransmit the same signal after amplification, an appropriate electronic switch may be employed. Alternatively, quarter-wave transformation may be carried out on the repeater receive signal in order to allow use of a shared antenna.

Other objects and features of the present invention will become apparent from the following detailed descriptions considered in conjunction with the accompanying drawings. It is to be understood, however, that the drawings are designed solely for the purpose of illustration and not as a definition of the limits of the invention.

BRIEF DESCRIPTION OF THE DRAWINGS

Fig. 1     shows a state-of-the-art remote control unit and a state-of-the-art device in standby mode;

Fig. 2     shows a first embodiment of a system according to the invention;

Fig. 3     shows a second embodiment of a system according to the invention;

Fig. 4     shows a third embodiment of a system according to the invention;

Fig. 5     shows a fourth embodiment of a system according to the invention;

Fig. 6     shows an embodiment of a repeater unit according to the invention;

Fig. 7a    shows a first realisation of a signal conversion unit in a repeater unit according to the invention;

Fig. 7b    shows a graph of voltage against power ratio for the circuit of Fig. 7a;

Fig. 8a    shows a second realisation of a signal conversion unit in a repeater unit according to the invention;

Fig. 8b    shows a graph of voltage against power ratio for the circuit of Fig. 8a;

Fig. 9a    shows a realisation of a signal conversion unit in a remote control interface unit of a device to be controlled in a system according to the invention;

Fig. 9b    shows a graph of voltage and current against power ratio for the circuit of Fig. 9a.

In the drawings, like numbers refer to like objects throughout. Objects in the diagrams are not necessarily drawn to scale.

DETAILED DESCRIPTION OF THE EMBODIMENTS

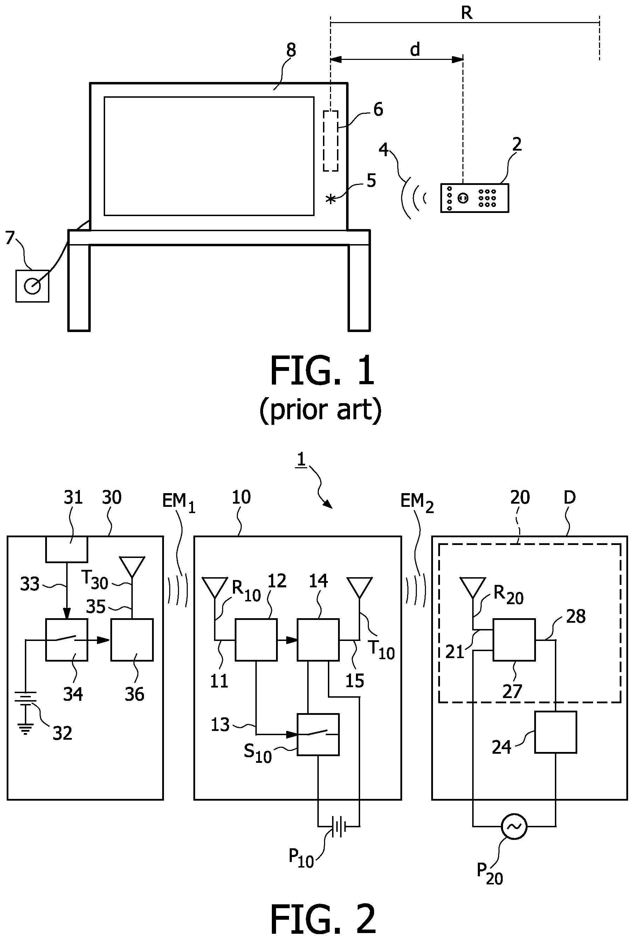

Fig. 1 shows a state-of-the-art situation with a remote-controllable device 8, in this case a television, and a remote control unit 2, which is usually operated by a user (not shown) at a variable distance d from the device 8. The user presses certain buttons on the remote control unit 2 to turn the device 8 on, to change device settings, for example to change channels or to adjust the loudspeaker volume, or to place the device 8 in a standby mode. The state-of-the-art remote control unit 2 shown operates by generating a radio-frequency control signal transmitted as electromagnetic radiation 4. When the remote control 2 is directed at the device 8, the signal 4 can be detected by a suitable interface 6 in the device 8, and converted into appropriate device control signals. In this state-of-the-art system, the device 8 can only detect signals issued by the remote control unit 2 when the distance d does not exceed the range R of the remote control unit 2. In other words, should the user move the remote control unit 2 so far away from the device 8 that the device 8 is outside the range R of the remote control unit 2, any signals issued by the remote control unit 2 will have been so far attenuated that they can no longer reliably be detected by the remote control interface 6 of the device 8.

The device 8 draws current from a power supply, indicated in the diagram by the mains socket 7. When in standby mode, the device 8 is not completely disconnected from the mains power, since the interface 6 requires a small amount of power to be able to react to an activation signal 4 from the remote control unit 2. Furthermore, a small amount of current is continuously drawn by the typical 'standby LED' 5 which emits light as long as the device 8 is in standby mode. If the user wishes to completely disconnect the device 8 from the power supply when not in use, he must do this directly, for example by pressing an on/off button on the device 8 itself or by unplugging the device 8 at the mains socket 7.

Fig. 2 shows a block diagram of a first embodiment of the system 1 according to the invention. The main elements of the system 1 are a repeater unit 10, a device to be controlled D, and a remote control unit 30 for issuing device control commands by means of radio-frequency signals. The remote control unit 30 can be the usual type of handheld unit. The device D can be any suitable device, for example a consumer electronics device connected to a mains power supply $P_{20}$, such as a television, satellite receiver, a lighting fixture, etc., and is shown here to have an effective load 24 representing the load of the device D during operation. The device D could also be any device controllable in, for example, a ZigBee or Bluetooth setup. For the sake of clarity, the relevant components of the remote control unit 30, repeater unit 10 and device D are emphasised relative to other components so that their functionality can be better explained.

The repeater unit 10 can be a compact unit placed essentially between the remote control unit 30 and the device D to be controlled, for example the repeater unit 10 could be affixed to a ceiling in an inconspicuous manner. The repeater unit 10 has its own power supply $P_{10}$, which may be any suitable power source such as a battery, a solar cell, or a mains power supply. When not in use, i.e. when the repeater unit 10 is inactive, it is entirely disconnected from the repeater power supply $P_{10}$. When in use, i.e. when the repeater unit 10 is activated, as will be explained in detail below, the repeater power supply $P_{10}$ is connected to modules of the repeater 10 which require a power source in order to operate.

The remote control unit 30 can be powered in the usual manner, for example using a battery pack 32, a piezoelectric sensor, etc. To select a function of the device D, a user (not shown in the diagram) can use the interface 31, for example an array of buttons, of the remote control unit 30. When a button is pressed, a corresponding control signal 33 acts on a switch 34 to connect the power to a signal generator 36, causing this to generate an electrical signal 35, which in turn causes a transmit antenna $T_{30}$ of the remote control unit 30 to resonate accordingly, so that electromagnetic radiation $EM_1$ is transmitted by the transmit antenna $T_{30}$. The signal generator 36 can generate the electrical signal 35 continuously, as long as the user depresses the button on the interface 31, as a pulsed signal (to increase the signal energy), or as a carrier signal modulated to carry device identification information such as an RFID code. The skilled person will know how an appropriate signal generator 36 can be realised in order to carry out such functions, so that these need not be further elaborated on here.

The electromagnetic radiation $EM_1$ transmitted by the remote control unit 30 arrives at the repeater unit 10, where a detector $R_{10}$, in this case a repeater receive antenna $R_{10}$, is caused to resonate accordingly so that an AC repeater receive signal 11 is generated. The repeater receive signal 11 is passively converted in a signal conversion unit 12 into a DC repeater switch-actuating signal 13. If the repeater 10 was previously inactive, a switch $S_{10}$ will have been in the open state, i.e. the repeater power supply $P_{10}$ will have previously been disconnected from the modules of the repeater 10, so that no part of the repeater 10 was drawing any current. However, once the repeater switch-actuating signal 13 is generated as described, the switch $S_{10}$ is closed, and the modules of the repeater unit 10 are connected to their power supply $P_{10}$.

The repeater receive signal 11, which essentially corresponds to the control signal 33 generated in response to the user input, can then be forwarded by the repeater unit 10 to the device D for which the control signal 33 was intended. To this end, the repeater receive signal 11 is passed to a signal module 14 of the repeater unit 10, in which the repeater receive signal 11 can be amplified or otherwise processed to give a repeater transmit signal 15, which in turn is transmitted as electromagnetic radiation $EM_2$ by a repeater transmit antenna $T_{10}$.

By appropriate choice of electrical and electronic components in the relevant modules 14, $T_{10}$ of the repeater unit 10, the transmitted electromagnetic radiation $EM_2$ can have at least as much energy as the electromagnetic radiation $EM_1$ originally transmitted by the remote control unit 30. For example, the signal module 14 may comprise an amplifier. In this way, the range that can be covered by the radio-frequency device control signals between the remote control unit 30 and the device D can be favourably increased without any significant additional power consumption on the part of the repeater unit 10, since this is only activated - i.e. connected to its power supply $P_{10}$ - when a signal issued by the remote control unit 30 is detected by the receive antenna $R_{10}$.

At the device end, the electromagnetic radiation $EM_2$ is detected by a detector, in this case a receive antenna $R_{20}$, to give a device receive signal 21. The device receive signal 21 is decoded or processed in the usual manner by a device control interface 27 of a remote control interface unit 20 of the device, which generates device control signals 28 accordingly, for example a device control signal 28 to change a channel or adjust the volume if the device D is a television. The function of such a device control interface 27 will be known to the skilled person and need not be described in any detail here.

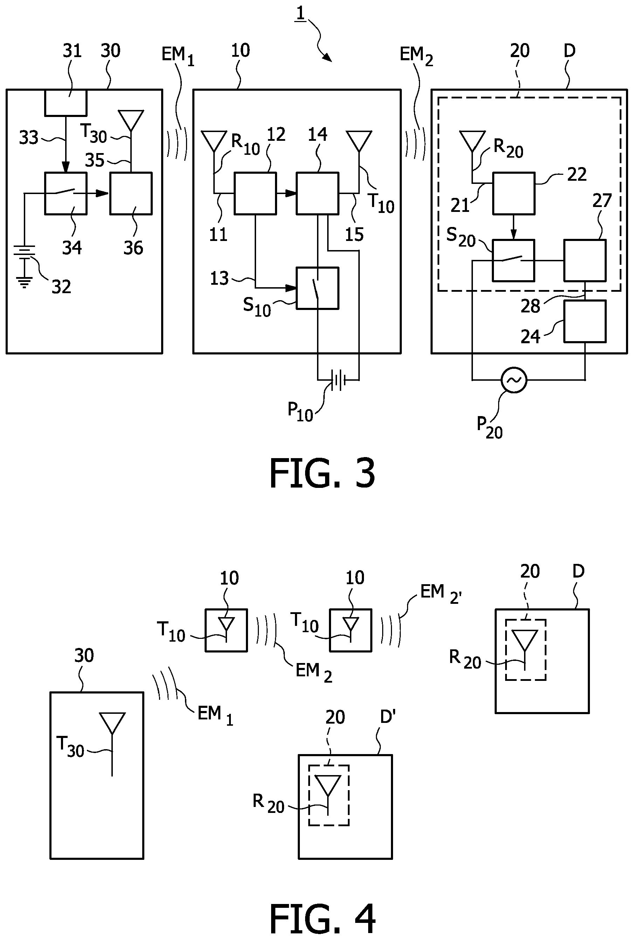

Fig. 3 shows a second embodiment of the system 1 according to the invention. Again, a remote control unit 30 is used to issue control signals through free space in the form of electromagnetic radiation $EM_1$ in order to control a device D. A repeater unit 10 between the remote control unit 30 and the device D can detect the electromagnetic radiation $EM_1$ issued by the remote control unit 30 and forward it to the device D.

Here, the device D not only has a device control interface 27 but also includes a remote control interface unit 20 with a passive signal conversion unit 22 and a switch $S_{20}$ to completely connect the device D to its power supply $P_{20}$ or completely disconnect the device D from

its power supply $P_{20}$. The functionality of the passive signal conversion unit 22 and the switch $S_{20}$ are essentially the same as the corresponding units 12, $S_{10}$ in the repeater unit 10. Indeed, the electrical components in the repeater signal conversion unit 12 and the device signal conversion unit 22 may be the same. However, since the device D will usually present a greater load 24, the device power switch $S_{20}$ should be chosen accordingly.

The system as shown has the advantage that the device D also can be completely disconnected from its power supply $P_{20}$ while not in use (for example when the user presses an 'off' button on the remote control unit 30), and can still be easily activated by a signal 35 issued by the remote control unit 30 (for example when the user presses an 'on' button on the remote control unit 30) over a longer range than would be possible using a state-of-the-art remote control unit 30, thanks to the repeater unit 10 which amplifies and retransmits the radio-frequency device on/off signals issued by the remote control unit 30.

The range that can be covered by the device control signals can be further increased by using more repeater units between the remote control unit and the device(s) of the system. Fig. 4 shows an example of such a realisation. Here, a remote control unit 30 converts a user input into electromagnetic radiation $EM_1$ which is detected by a first repeater unit 10 closest to the remote control unit 30. This first repeater unit 10 detects, amplifies and retransmits the signal as electromagnetic radiation $EM_2$, which in turn is detected by a second repeater unit 10 further away from the remote control unit 30 but closer to the device D. This second repeater unit 10 amplifies and retransmits the signal as electromagnetic radiation $EM_2'$, which is ultimately detected by the device D. Depending on the on/off state of the device D and on the control signal content, a remote control interface 20 of the device D can cause the device to be connected to its power supply, can cause the device to be disconnected from its power supply, or can generate a device control signal to drive the device according to a function selected by the user. Fig. 4 also shows a second device D', that can also be controlled by the same remote control unit 30. Here, the second device D' can detect the electromagnetic radiation $EM_2$ originating from the first repeater unit 10.

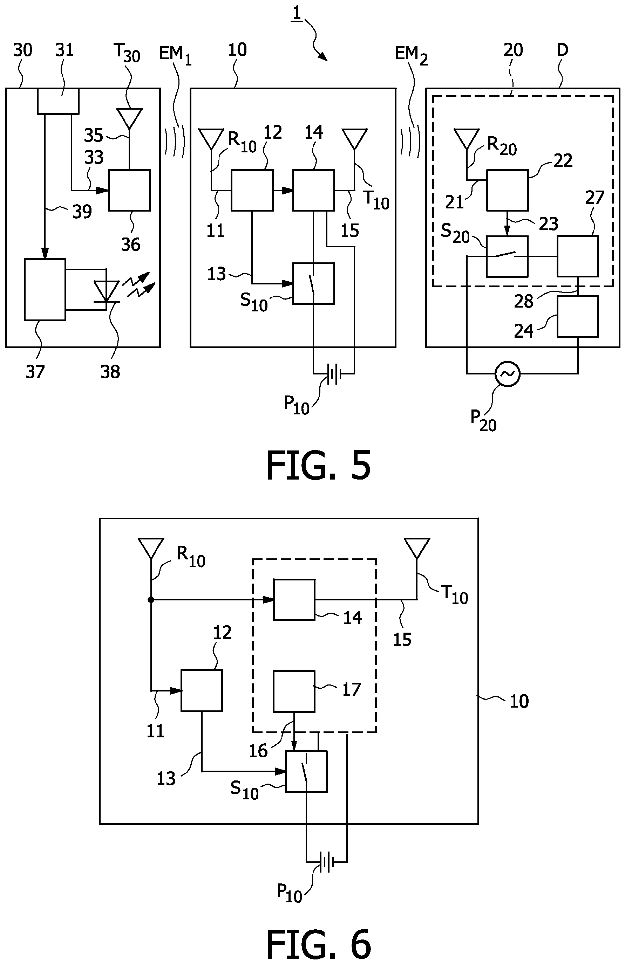

Fig. 5 shows a fourth embodiment of the system 1 according to the invention. Again, a remote control unit 30 is used to control a device D. A repeater unit 10 between the remote control unit 30 and the device D can detect electromagnetic radiation $EM_1$ issued by the remote control unit 30 and forward it to the device D.

In this embodiment, the remote control unit 30 comprises an infrared interface 37 with an infrared diode 38. The remote control unit 30 also comprises a radio-frequency signal generator 36 and transmit antenna $T_{30}$ as described above. For the sake of clarity, the battery of the remote control unit 30 is not shown in the diagram, but is understood to be included. Here, the remote control unit 30 can generate a radio-frequency device on/off signal 33 for transmitting by the transmit antenna $T_{30}$, as well as an infrared device function control signal 39 for transmission by the infrared diode 38. These signals 33, 39 can be generated in the user interface 31 in the usual manner, for example by the use of dedicated buttons such as an on/off button, a channel select button, etc.

The device D comprises not only an infrared device control interface 27 for detecting and interpreting infrared signals originating from the remote control unit 30, but also a remote control interface unit 20 and a switch $S_{20}$ for completely disconnecting the device D from its power supply $P_{20}$, as described in Fig. 3 above. The second signal conversion unit 22 converts the device receive signal 21 into a device switch-actuating signal 23.

The repeater unit 10 could also be used to extend the range between the remote control unit 30 and the device D, having, in this example, 'only' an infrared interface. To this end, the repeater unit 10 could also be equipped with an infrared interface (not shown in the diagram) for receiving and relaying infrared signals, as well as the radio-frequency interfaces described above. In this way, such a repeater unit 10 can easily detect infrared signals originating from the remote control unit 30 and can redirect them at the intended device D. Evidently, a line of sight would be required between such a remote control unit 30 and the repeater unit 10, and between the repeater unit 10 and the device D.

In the embodiments of the repeater unit described above with the aid of Figs. 2 - 5, the switch $S_{10}$ can be closed as long as a repeater receive signal 11 is detected. As soon as the repeater receive signal 11 reaches a null level, the switch can open again. However, it may be convenient to keep the switch $S_{10}$ closed for a longer duration in order to increase the performance of the remote control interaction between the user and the device. The object of the invention, namely to provide an increased range in a remote control system and improved user interaction while keeping power consumption to a minimum, can be further enhanced by a repeater unit which can turn itself off- i.e. open its power switch - after a predefined duration. An embodiment of such a repeater unit 10 is shown in Fig. 6. Here, the repeater unit 10 includes the components and modules already described - signal conversion unit 12, repeater switch $S_{10}$, receive antenna $R_{10}$ and transmit antenna $T_{10}$, signal generator 14 - and an additional timer module 17. A signal detected by the receive antenna $R_{10}$ and passively converted into a repeater switch-actuating signal 13, as described above, actuates the switch $S_{10}$ which supplies power to the non-passive parts of the repeater, in the diagram enclosed by the dashed line. Once the switch $S_{10}$ is closed, therefore, the timer module 17 is triggered. The timer module 17 can comprise a counter with a stored predefined upper limit value corresponding to a time limit. Once the predefined value is reached, the timer module 17 issues a switch control signal 16 to cause the switch $S_{10}$ to be opened again. In this way, the repeater unit 10 can be completely disconnected from its power supply $P_{10}$

after a predefined time has elapsed after the last detected repeater receive signal, for example a few minutes. This can allow a succession of control signals from the remote control unit to be retransmitted to the device without disconnecting the repeater unit 10 from its power supply $P_{10}$. Such a time duration may be sufficient for a user to configure a home entertainment system, for example to turn on a CD player and select a track, or to turn on a television and satellite receiver and select a channel. Thereafter, the repeater unit 10 can 'hibernate' once more in its inactive state, disconnected from its power supply $P_{10}$. The next time the user presses a button on the remote control unit (not shown in the diagram), the switch $S_{10}$ is closed again and the repeater unit 10 is activated once more.

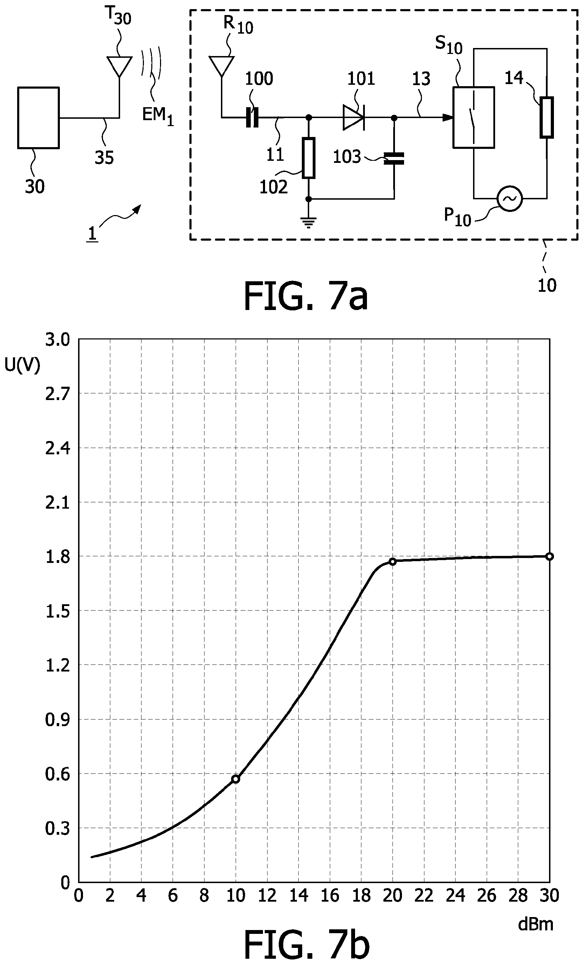

In the following, Figs. 7a, 7b, 8a, 8b, 9a, and 9b will be used to describe a passive signal conversion in a repeater unit, by illustrating electromagnetic radiation levels, originating from a control signal transmitted by a transmit antenna of a remote control unit and detected by the repeater unit. However, it will be understood that the circuits described could equally well apply to signal conversion on electromagnetic radiation originating from a repeater unit and detected by a receive antenna in a remote control interface unit of a device to be controlled. In both a repeater unit and a remote control interface unit, the passive signal-conversion circuit can be realised as will be described below. However, the choice of switch can depend on the effective load presented by a device to be controlled, which may be considerably greater than that of a repeater unit.

Fig. 7a shows a first realisation of the passive conversion unit for use in a repeater unit or a remote control interface unit of a device to be controlled. Here, the electromagnetic radiation $EM_1$ is detected by a detecting antenna $R_{10}$, which resonates to give an induced AC signal at the receive side, and is then decoupled by a decoupling capacitor 100 (with a capacitance of 1.5 pF) to give a repeater receive signal 11. This is rectified by a rectifier diode 101, for example an Agilent Technologies HSMS285x series Schottky diode. Thereafter, a smoothing capacitor 103 with a capacitance of 47 pF smoothes the rectified output to give the repeater switch-actuating signal 13. A small resistor 102 with a resistance of 10 k$\Omega$ allows a minimal current to flow in the passive conversion unit. The elements of the repeater unit 10 that draw current from the power supply $P_{10}$ during operation are represented by a resistive load 14.

Fig. 7b shows a graph of voltage U (in Volt), measured across the smoothing capacitor 103, against the power ratio in dBm of the electromagnetic radiation $EM_1$ transmitted by the transmitting antenna $T_{30}$. As can be seen from the graph, a voltage of about 1.77 V can be obtained across the smoothing capacitor 103 when the remote control unit 30 provides electromagnetic radiation $EM_1$ at 20 dBm. This voltage is sufficient to actuate a MEMS switch $S_{10}$. When this switch $S_{10}$ is closed, the load 14 is connected to the power supply $P_{10}$, and when

the switch $S_{10}$ is opened, the load 14 is disconnected from the power supply $P_{10}$.

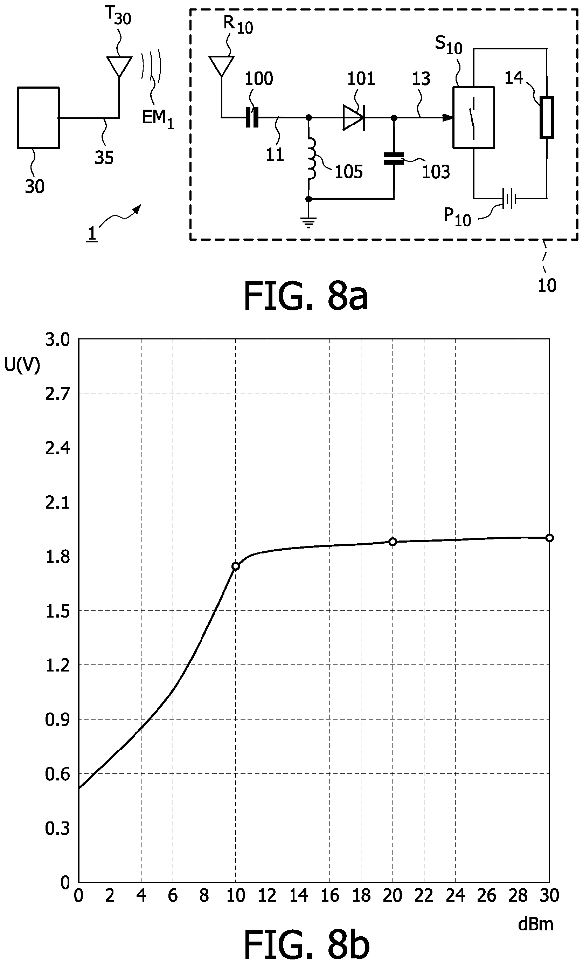

A rectified signal of higher voltage can be obtained using an alternative passive conversion circuit, as shown in Fig. 8a. Here, a resonant circuit is given by an inductor 105 with an inductance of 22 nH in conjunction with the decoupling capacitor 100 (1.5 pF). These values are chosen such that the frequency of the signal induced at the receiver side is essentially the same as that on the transmit side, using the well-known function for a resonator circuit:

$$f_c = \frac{1}{2\pi\sqrt{LC}}$$

where L is the inductance of an inductor, and C is the capacitance of a capacitor of the resonator circuit. The values of the components 105, 100 are chosen so that the frequency $f_c$ of the induced signal is essentially the same as the frequency of the signal generated in the remote control unit 30, in this case 876 MHz. The resonant circuit is followed by the same rectifier circuit components, namely a rectifier diode 101 and smoothing capacitor 103 as described in Fig. 7a above.

This circuit results in a higher voltage across the smoothing capacitor 103 while requiring lower signal energy levels at the transmit side. In this example also, a MEMS (micro-electromechanical system) could be used for the switch $S_{10}$. As can be seen from the graph in Fig. 8b, a voltage of about 1.76 V is achieved at a signal power of only 10 dBm. This compares favourably with the values obtained using the circuit in Fig. 7a. This means that the switch $S_{10}$ can be reliably and accurately switched even with a signal of relatively low power at the transmit side.

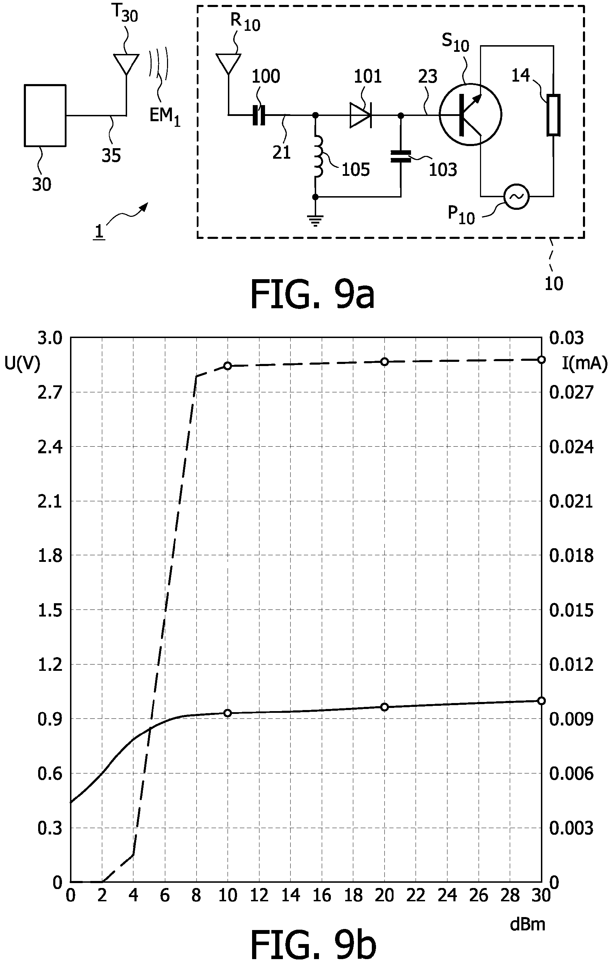

The repeater unit could also conceivably be connected to the mains power supply instead of a battery or solar cell. In such a realisation, it is necessary to switch higher voltages than those which can be tolerated by a MEMS switch, so that a semiconductor switch may be used, as shown in Fig. 9a. In this example, the semiconductor switch comprises a transistor switch S10 such as Agilent Technologies HBFP0450. The transistor switch S10 is capable of switching a heavier load. It will be emphasised at this point that the circuitry in this example is only very simply outlined, and that other components and circuitry will be required to disconnect the repeater unit from the mains power supply $P_{10}$ or to interface the low-voltage semiconductor circuitry with the device-side high-voltage circuitry. This will be known to a person skilled in the art, and need not be described in detail here.

Fig. 9b shows the corresponding graphs of voltage U (in Volt, solid line) and load current I (in milliAmpere, dashed line) against power ratio in dBm. As can be seen clearly from the graph, even a signal power of only 10 dBm is sufficient to obtain a voltage of 0.915 V across the smoothing capacitor 103 and to allow a current of 28 mA to flow through the load 14. The obtained values for voltage and current are only marginally less than the values obtained for signal power ratios of 20 dBm (0.937 V, 29 mA) and 30 dBm (0.962 V, 29 mA), respectively.

This circuit solution also disconnects the repeater unit 10 from the mains power supply $P_{10}$ when the repeater unit 10 is turned off. When the repeater unit 10 is turned off, this circuit does not draw any current. Only when the repeater unit 10 is turned on, will a small amount of power be consumed by the semiconductor circuit, negligible compared with the standby power dissipated by a typical consumer electronics device in standby mode according to state-of-the-art solutions.

Although the present invention has been disclosed in the form of a number of preferred embodiments, it is to be understood that additional modifications or variations could be made to the described embodiments without departing from the scope of the invention. For example, the signal arriving at a repeater unit or a remote control interface unit may, under certain conditions, be relatively weak. A weak input signal results in a correspondingly low DC signal level, so that the signal may be of insufficient strength to, for example, actuate a switch. Therefore, a weak DC signal at the rectifier output of a repeater unit or remote control interface module can be boosted in the signal conversion unit by means of an appropriate voltage doubler or voltage multiplier to provide a stronger output signal. An example of such a voltage multiplier is a Villard cascade circuit, comprising an arrangement of capacitors and diodes. Other alternative voltage doubler circuits are possible, as will be clear to a person skilled in the art.

For the sake of clarity, it is to be understood that the use of "a" or "an" throughout this application does not exclude a plurality, and "comprising" does not exclude other steps or elements. A "unit" or "module" can comprise a number of units or modules, unless otherwise stated.

**Claims**

1. A system (1) for controlling a device (D, D'), which system comprises
   a remote control unit (30) for transmitting a signal (35) in the form of electromagnetic radiation ($EM_1$), a repeater unit (10) comprising

   - a detector ($R_{10}$) for detecting electromagnetic radiation ($EM_1$, $EM_2$) to obtain a repeater receive signal (11);
   - a first signal conversion unit (12) for passively converting the repeater receive signal (11) into a repeater switch-actuating signal (13) for actuating a first switch ($S_{10}$) to switch the repeater unit (10) between an inactive mode, in which the repeater unit (10) is completely disconnected from a first power supply ($P_{10}$) so that no current is drawn by the repeater unit (10), and an operating mode, in which current is drawn from the first power supply ($P_{10}$) by the repeater unit (10);
   - a signal module (14) powered by the first power supply ($P_{10}$) to generate a repeater transmit signal (15) on the basis of the repeater receive signal (11);
   - a repeater transmit interface ($T_{10}$) for transmitting the repeater transmit signal (15) in the form of electromagnetic radiation ($EM_2$, $EM_2'$), and a device (D, D') to be controlled, which device (D, D') comprises a remote control interface unit (20) for detecting the electromagnetic radiation ($EM_2$, $EM_2'$) transmitted by the repeater transmit interface ($T_{10}$) to obtain a device receive signal (21).

2. A system (1) according to claim 1, wherein the first signal conversion unit (12) of the repeater unit (10) comprises a passive rectifier circuit.

3. A system (1) according to claim 1 or 2, wherein the remote control interface unit (20) comprises

   - a device receive antenna ($R_{20}$) for detecting electromagnetic radiation ($EM_2$, $EM_2'$,) to obtain a device receive signal (21);
   - a second signal conversion unit (22) for passively converting the device receive signal (21) into a device switch-actuating signal (23); and
   - a device power switch ($S_{20}$) for actuating by the device switch-actuating signal (23) to switch the device to be controlled (D, D') between an operating mode, in which current is drawn by the device (D, D') during operation, and an inactive mode, in which the device to be controlled (D, D') is completely disconnected from a device power supply ($P_{20}$) so that no current is drawn by that device (D, D').

4. A system (1) according to claim 3, wherein the second signal conversion unit (22) of the remote control interface unit (20) comprises a passive rectifier circuit for passively converting the device receive signal (21) into the device switch-actuating signal (23).

5. A system (1) according to any one of the preceding claims, wherein the remote control unit (30) comprises

   - a user interface (31) for inputting a control input (33);
   - a signal generator (36) for generating a control signal (35) according to the control input (33); and
   - a transmit interface ($T_{30}$) for transmitting the control signal (35) in the form of electromagnetic

radiation $(EM_1)$.

6. A repeater unit (10) for retransmitting a signal originating from a remote control unit (30) and intended for a device to be controlled (D, D'), which repeater unit (10) comprises

- a detector $(R_{10})$ for detecting electromagnetic radiation $(EM_1, EM_2)$ to obtain a repeater receive signal (11);
- a first signal conversion unit (12) for passively converting the repeater receive signal (11) to obtain a repeater switch-actuating signal (13) for actuating a repeater switch $(S_{10})$ to switch the repeater unit (10) between an inactive mode, in which the repeater unit (10) is completely disconnected from a repeater power supply $(P_{10})$ so that no current is drawn by the repeater unit (10), and an operating mode, in which current is drawn from the repeater power supply $(P_{10})$ by the repeater unit (10);
- a signal module (14) powered by the repeater power supply $(P_{10})$ to generate a repeater transmit signal (15) on the basis of the repeater receive signal (11); and
- a repeater transmit interface $(T_{10})$ for transmitting the repeater transmit signal (15) in the form of electromagnetic radiation $(EM_2, EM_2',)$.

7. A repeater unit (10) according to claim 6, wherein the repeater signal module (14) comprises an amplifier circuit for amplifying the repeater receive signal (11) to give the repeater transmit signal (15).

8. A repeater unit (10) according to claim 6 or 7, wherein the signal module (14) is realized such that information content of the repeater transmit signal (15) corresponds to information content of the repeater receive signal (11).

9. A repeater unit (10) according to any of claims 6 to 8, comprising a timer module (17) for providing a time-related output signal (16) after a predefined time duration elapses after detection of the repeater receive signal (11), and for controlling the repeater switch $(S_{10})$ to switch the repeater unit (10) into an inactive mode, in which the repeater unit (10) is completely disconnected from a repeater power supply $(P_{10})$ so that no current is drawn by the repeater unit (10).

10. A method of controlling a device (D, D'), which method comprises the steps of

- transmitting a control signal (35) from a remote control unit (30) in the form of electromagnetic radiation $(EM_1)$;
- detecting electromagnetic radiation $(EM_1,$ $EM_2)$ with a repeater receive unit (12) in a repeater unit (10) to obtain a repeater receive signal (11);
- passively converting the repeater receive signal (11) into a repeater switch-actuating signal (13);
- actuating a repeater switch $(S_{10})$ of the repeater unit (10) using the repeater switch-actuating signal (13) to switch the repeater unit (10) between an inactive mode, in which the repeater unit (10) is completely disconnected from a repeater power supply $(P_{10})$ so that no current is drawn by the repeater unit (10), and an operating mode, in which current is drawn from the repeater power supply $(P_{10})$ by the repeater unit (10);
- using the repeater power supply $(P_{10})$ to drive a signal module (14) of the repeater unit (10) on the basis of the repeater receive signal (11) to generate a repeater transmit signal (15);
- transmitting the repeater transmit signal (15) in the form of electromagnetic radiation $(EM_2,$ $EM_2',)$ by means of a repeater transmit interface $(T_{10})$ of the repeater unit (10); and
- detecting the electromagnetic radiation $(EM_2,$ $EM_2')$ transmitted by the repeater transmit interface $(T_{10})$ with a remote control interface unit (20) of the device to be controlled (D, D') to obtain a device receive signal (21).

11. A method according to claim 10, wherein the device to be controlled (D, D') comprises a device power supply $(P_{20})$ and a device power switch $(S_{20})$, and the step of actuating the device power switch $(S_{20})$ of the device to be controlled (D, D') comprises passively converting the device receive signal (21) into a device switch-actuating signal (23) and actuating the switch $(S_{20})$ using the device switch-actuating signal (23) to switch the device (D, D') between an operating mode, in which current is drawn from the device power supply $(P_{20})$ by the device (D, D') during operation, and an inactive mode, in which the device (D, D') is completely disconnected from the device power supply $(P_{20})$ so that no current is drawn by the device (D, D').

12. A method according to claim 10 or 11, wherein a signal (15, 35) to be transmitted comprises a high-frequency signal (15, 35) in an ISM frequency band.

13. A method according to any of claims 10 to 12, wherein a signal (15, 35) to be transmitted is generated on the basis of a device identification code, which device identification code is associated with a specific device to be controlled (D, D').

14. A method according to claim 13, wherein a device receive signal (21) is decoded to determine a device identification code, and a switch ($S_{20}$) of a device to be controlled (D, D') is actuated on the basis of the device identification code.

**Patentansprüche**

1. System (1) zur Steuerung eines Geräts (D, D'), wobei das Gerät umfasst:

eine Fernbedienungseinheit (30) zur Übertragung eines Signals (35) in Form elektromagnetischer Strahlung ($EM_1$), eine Repeatereinheit (10) mit:

- einem Detektor ($R_{10}$) zum Detektieren elektromagnetischer Strahlung ($EM_1$, $EM_2$), um ein Repeater-Empfangssignal (11) zu erhalten;
- einer ersten Signalumwandlungseinheit (12) zur passiven Umwandlung des Repeater-Empfangssignals (11) in ein Repeater-Schalterbetätigungssignal (13) zur Betätigung eines ersten Schalters ($S_{10}$), um die Repeatereinheit (10) zwischen einem inaktiven Modus, in dem die Repeatereinheit (10) von einer ersten Stromversorgung ($P_{10}$) vollständig getrennt ist, so dass von der Repeatereinheit (10) kein Strom entnommen wird, und einem Betriebsmodus, in dem von der Repeatereinheit (10) Strom von der ersten Stromversorgung ($P_{10}$) entnommen wird, zu schalten;
- einem von der ersten Stromversorgung ($P_{10}$) gespeisten Signalmodul (14), um ein Repeater-Sendesignal (15) auf der Basis des Repeater-Empfangssignals (11) zu erzeugen;
- einer Repeater-Sendeschnittstelle ($T_{10}$) zur Übertragung des Repeater-Sendesignals (15) in Form elektromagnetischer Strahlung ($EM_2$, $EM_2'$).

sowie
ein zu steuerndes Gerät (D, D'), wobei das Gerät (D, D') eine Fernbedienungsschnittstelleneinheit (20) zum Detektieren der von der Repeater-Sendeschnittstelle ($T_{10}$) übertragenen elektromagnetischen Strahlung ($EM_2$, $EM_2'$) umfasst, um ein GeräteEmpfangssignal (21) zu erhalten.

2. System (1) nach Anspruch 1, wobei die erste Signalumwandlungseinheit (12) der Repeatereinheit (10) eine passive Gleichrichterschaltung umfasst.

3. System (1) nach Anspruch 1 oder 2, wobei die Fernbedienungsschnittstelleneinheit (20) umfasst:

- eine Geräte-Empfangsantenne ($R_{20}$) zum Detektieren elektromagnetischer Strahlung ($EM_2$, $EM_2'$), um ein Geräte-Empfangssignal (21) zu erhalten,
- eine zweite Signalumwandlungseinheit (22) zur passiven Umwandlung des Geräte-Empfangssignals (21) in ein Geräte-Schalterbetätigungssignal (23); sowie
- einen Geräte-Leistungsschalter ($S_{20}$) zur Betätigung durch das Geräte-Schalterbetätigungssignal (23), um das zu steuernde Gerät (D, D') zwischen einem Betriebsmodus, in dem von dem Gerät (D, D') während des Betriebs Strom entnommen wird, und einem inaktiven Modus, in dem das zu steuernde Gerät (D, D') von einer Geräte-Stromversorgung ($P_{20}$) vollständig getrennt ist, so dass von diesem Gerät (D, D') kein Strom entnommen wird, zu schalten.

4. System (1) nach Anspruch 3, wobei die zweite Signalumwandlungseinheit (22) der Fernbedienungsschnittstelleneinheit (20) eine passive Gleichrichterschaltung umfasst, um das Geräte-Empfangssignal (21) in das Geräte-Schalterbetätigungssignal (23) passiv umzuwandeln.

5. System (1) nach einem der vorangegangenen Ansprüche, wobei die Fernbedienungseinheit (30) umfasst;

- eine Benutzerschnittstelle (31) zur Eingabe einer Steuereingabe (33);
- einen Signalgenerator (36) zur Erzeugung eines Steuersignals (35) entsprechend der Steuereingabe (33); sowie
- eine Sendeschnittstelle ($T_{30}$) zur Übertragung des Steuersignals (35) in Form elektromagnetischer Strahlung ($EM_1$).

6. Repeatereinheit (10), die zur erneuten Übertragung eines von einer Fernbedienungseinheit (30) ausgehenden Signals vorgesehen ist und für ein zu steuerndes Gerät (D, D') bestimmt ist, wobei die Repeatereinheit (10) umfasst:

- einen Detektor ($R_{10}$) zum Detektieren elektromagnetischer Strahlung ($EM_1$, $EM_2$), um ein Repeater-Empfangssignal (11) zu erhalten;
- eine erste Signalumwandlungseinheit (12) zur passiven Umwandlung des Repeater-Empfangssignals (11), um ein Repeater-Schalterbetätigungssignal (13) zur Betätigung eines Repeaterschalters ($S_{10}$) zu erhalten, um die Repeatereinheit (10) zwischen einem inaktiven Modus, in dem die Repeatereinheit (10) von einer Repeater-Stromversorgung ($P_{10}$) vollstän-

dig getrennt ist, so dass von der Repeatereinheit (10) kein Strom entnommen wird, und einem Betriebsmodus, in dem von der Repeatereinheit (10) Strom von der Repeater-Stromversorgung ($P_{10}$) entnommen wird, zu schalten;
- ein von der Repeater-Stromversorgung ($P_{10}$) gespeistes Signalmodul (14), um ein Repeater-Sendesignal (15) auf der Basis des Repeater-Empfangssignals (11) zu erzeugen; sowie
- eine Repeater-Sendeschnittstelle ($T_{10}$) zur Übertragung des Repeater-Sendesignals (15) in Form elektromagnetischer Strahlung ($EM_2$, $EM_2'$).

**7.** Repeatereinheit (10) nach Anspruch 6, wobei das Repeater-Signalmodul (14) eine Verstärkerschaltung zur Verstärkung des Repeater-Empfangssignals (11) umfasst, um das Repeater-Sendesignal (15) vorzusehen.

**8.** Repeatereinheit (10) nach Anspruch 6 oder 7, wobei das Signalmodul (14) so realisiert wird, dass der Informationsinhalt des Repeater-Sendesignals (15) dem Informationsinhalt des Repeater-Empfangssignals (11) entspricht.

**9.** Repeatereinheit (10) nach einem der Ansprüche 6 bis 8, mit einem Timermodul (17), um ein zeitbezogenes Ausgangssignal (16) bereitzustellen, nachdem eine vordefinierte Zeitdauer nach Detektion des Repeater-Empfangssignals (11) verstrichen ist, und um den Repeaterschalter ($S_{10}$) so zu steuern, dass die Repeatereinheit (10) in einen inaktiven Modus geschaltet wird, in dem die Repeatereinheit (10) von einer Repeater-Stromversorgung ($P_{10}$) vollständig getrennt ist, so dass kein Strom von der Repeatereinheit (10) entnommen wird.

**10.** Verfahren zur Steuerung eines Geräts (D, D'), wobei das Verfahren die folgenden Schritte umfasst, wonach:

- ein Steuersignal (35) von einer Fernbedienungseinheit (30) in Form elektromagnetischer Strahlung ($EM_1$) übertragen wird;
- elektromagnetische Strahlung ($EM_1$, $EM_2$) mit einer Repeater-Empfangseinheit (12) in einer Repeatereinheit (10) detektiert wird, um ein Repeater-Empfangssignal (11) zu erhalten;
- das Repeater-Empfangssignal (11) in ein Repeater-Schalterbetätigungssignal (13) passiv umgewandelt wird;
- ein Repeaterschalter ($S_{10}$) der Repeatereinheit (10) unter Verwendung des Repeater-Schalterbetätigungssignals (13) betätigt wird, um die Repeatereinheit (10) zwischen einem inaktiven Modus, in dem die Repeatereinheit (10) von einer Repeater- Stromversorgung ($P_{10}$)

vollständig getrennt ist, so dass von der Repeatereinheit (10) kein Strom entnommen wird, und einem Betriebsmodus, in dem von der Repeatereinheit (10) Strom von der Repeater-Stromversorgung ($P_{10}$) entnommen wird, zu schalten;
- die Repeater-Stromversorgung ($P_{10}$) dazu verwendet wird, ein Signalmodul (14) der Repeatereinheit (10) aufgrund des Repeater-Empfangssignals (11) anzusteuern, um ein Repeater-Sendesignal (15) zu erzeugen;
- das Repeater-Sendesignal (15) in Form elektromagnetischer Strahlung ($EM_2$, $EM_2'$) mit Hilfe einer Repeater-Sendeschnittstelle ($T_{10}$) der Repeatereinheit (10) übertragen wird; und
- die durch die Repeater-Sendeschnittstelle ($T_{10}$) übertragene elektromagnetische Strahlung ($EM_2$, $EM_2'$) mit Hilfe einer Fernbedienungsschnittstelleneinheit (20) des zu steuernden Geräts (D, D') detektiert wird, um ein Geräte-Empfangssignal (21) zu erhalten.

**11.** Verfahren nach Anspruch 10, wobei das zu steuernde Gerät (D, D') eine Geräte-Stromversorgung ($P_{20}$) sowie einen Geräte-Leistungsschalter ($S_{20}$) umfasst, und wobei der Schritt des Betätigens des Geräte-Leistungsschalters ($S_{20}$) des zu steuernden Geräts (D, D') das passive Umwandeln des Geräte-Empfangssignals (21) in ein Geräte-Schalterbetätigungssignal (23) sowie das Betätigen des Schalters ($S_{20}$) unter Verwendung des Geräte-Schalterbetätigungssignals (23) beinhaltet, um das Gerät (D, D') zwischen einem Betriebsmodus, in dem von dem Gerät (D, D') von der Geräte-Stromversorgung ($P_{20}$) Strom entnommen wird, und einem inaktiven Modus, in dem das Gerät (D, D') von der Geräte-Stromversorgung ($P_{20}$) vollständig getrennt ist, so dass von dem Gerät (D, D') kein Strom entnommen wird, zu schalten.

**12.** Verfahren nach Anspruch 10 oder 11, wobei ein zu übertragendes Signal (15, 35) ein Hochfrequenzsignal (15, 35) in einem ISM-Frequenzband umfasst.

**13.** Verfahren nach einem der Ansprüche 10 bis 12, wobei ein zu übertragendes Signal (15, 35) aufgrund eines Geräteidentifikationscodes erzeugt wird, wobei der Geräteidentifikationscode einem bestimmten zu steuernden Gerät (D, D') zugeordnet wird.

**14.** Verfahren nach Anspruch 13, wobei ein Geräte-Empfangssignal (21) decodiert wird, um einen Geräteidentifikationscode zu ermitteln, und ein Schalter ($S_{20}$) eines zu steuernden Geräts (D, D') aufgrund des Geräteidentifikationscodes betätigt wird.

## Revendications

1. Système (1) pour commander un dispositif (D, D'), lequel système comprend une unité de commande à distance (30) pour émettre un signal (35) sous forme d'un rayonnement électromagnétique ($EM_1$), une unité de répéteur (10) comprenant

   - un détecteur ($R_{10}$) pour détecter un rayonnement électromagnétique ($EM_1$, $EM_2$) pour obtenir un signal de réception de répéteur (11) ;
   - une première unité de conversion de signal (12) pour convertir de manière passive le signal de réception de répéteur (11) en un signal d'actionnement de commutateur de répéteur (13) pour actionner un premier commutateur ($S_{10}$) pour commuter l'unité de répéteur (10) entre un mode inactif, dans lequel l'unité de répéteur (10) est complètement déconnectée d'une première alimentation électrique ($P_{10}$) de sorte qu'aucun courant ne soit prélevé par l'unité de répéteur (10), et un mode de fonctionnement, dans lequel un courant est prélevé à partir de la première alimentation électrique ($P_{10}$) par l'unité de répéteur (10) ;
   - un module de signal (14) alimenté par la première alimentation électrique ($P_{10}$) pour générer un signal d'émission de répéteur (15) sur la base du signal de réception de répéteur (11) ;
   - une interface d'émission de répéteur ($T_{10}$) pour émettre le signal d'émission de répéteur (15) sous forme d'un rayonnement électromagnétique ($EM_2$, $EM_2$'), et

   un dispositif (D, D') à commander, lequel dispositif (D, D') comprend une unité d'interface de commande à distance (20) pour détecter le rayonnement électromagnétique ($EM_2$, $EM_2$') émis par l'interface d'émission de répéteur ($T_{10}$) pour obtenir un signal de réception de dispositif (21).

2. Système (1) selon la revendication 1, dans lequel la première unité de conversion de signal (12) de l'unité de répéteur (10) comprend un circuit redresseur passif.

3. Système (1) selon la revendication 1 ou 2, lequel l'unité d'interface de commande à distance (20) comprend

   - une antenne de réception de dispositif ($R_{20}$) pour détecter un rayonnement électromagnétique ($EM_2$, $EM_2$') pour obtenir un signal de réception de dispositif (21) ;
   - une seconde unité de conversion de signal (22) pour convertir de manière passive le signal de réception de dispositif (21) en un signal d'actionnement de commutateur de dispositif (23) ; et
   - un commutateur d'alimentation de dispositif ($S_{20}$) pour actionner par le signal d'actionnement de commutateur de dispositif (23) la commutation du dispositif à commander (D, D') entre un mode de fonctionnement, dans lequel un courant et prélevé par le dispositif (D, D') en fonctionnement, et un mode inactif, dans lequel le dispositif à commander (D, D') est complètement déconnecté d'une alimentation électrique de dispositif ($P_{20}$) de sorte qu'aucun courant ne soit prélevé par le dispositif (D, D').

4. Système (1) selon la revendication 3, dans lequel la seconde unité de conversion de signal (22) de l'unité d'interface de commande à distance (20) comprend un circuit redresseur passif pour convertir de manière passive le signal de réception de dispositif (21) en signal d'actionnement de commutateur de dispositif (23).

5. Système (1) selon l'une quelconque des revendications précédentes, dans lequel l'unité de commande à distance (30) comprend

   - une interface utilisateur (31) pour entrer une entrée de commande (33) ;
   - un générateur de signal (36) pour générer un signal de commande (35) en fonction de l'entrée de commande (33) ; et
   - une interface d'émission ($T_{30}$) pour émettre le signal de commande (35) sous forme d'un rayonnement électromagnétique ($EM_1$).

6. Unité de répéteur (10) pour réémettre un signal provenant d'une unité de commande à distance (30) et destiné à un dispositif à commander (D, D'), laquelle unité de répéteur (10) comprend :

   - un détecteur ($R_{10}$) pour détecter un rayonnement électromagnétique ($EM_1$, $EM_2$) pour obtenir un signal de réception de répéteur (11) ;
   - une première unité de conversion de signal (12) pour convertir de manière passive le signal de réception de répéteur (11) pour obtenir un signal d'actionnement de commutateur de répéteur (13) pour actionner un commutateur de répéteur ($S_{10}$) pour commuter l'unité de répéteur (10) entre un mode inactif, dans lequel l'unité de répéteur (10) est complètement déconnectée d'une alimentation électrique de répéteur ($P_{10}$) de sorte qu'aucun courant ne soit prélevé par l'unité de répéteur (10), et un mode de fonctionnement, dans lequel un courant est prélevé à partir de l'alimentation électrique de répéteur ($P_{10}$) par l'unité de répéteur (10) ;
   - un module de signal (14) alimenté par l'alimentation électrique de répéteur ($P_{10}$) pour générer

un signal d'émission de répéteur (15) sur la base du signal de réception de répéteur (11) ; et

- une interface d'émission de répéteur ($T_{10}$) pour émettre le signal d'émission de répéteur (15) sous forme d'un rayonnement électromagnétique ($EM_2$, $EM_2'$).

7. Unité de répéteur (10) selon la revendication 6, dans laquelle le module de signal de répéteur (14) comprend un circuit amplificateur pour amplifier le signal de réception de répéteur (11) pour donner le signal d'émission de répéteur (15).

8. Unité de répéteur (10) selon la revendication 6 ou 7, dans laquelle le module de signal (14) est conçu de sorte qu'un contenu d'informations du signal d'émission de répéteur (15) corresponde à un contenu d'informations du signal de réception de répéteur (11).

9. Unité de répéteur (10) selon l'une quelconque des revendications 6 à 8, comprenant un module de temporisation (17) pour fournir un signal de sortie lié au temps (16) après qu'un laps de temps prédéfini s'est écoulé suite à une détection du signal de réception de répéteur (11), et pour commander le commutateur de répéteur ($S_{10}$) pour commuter l'unité de répéteur (10) en un mode inactif, dans lequel l'unité de répéteur (10) est complètement déconnectée d'une alimentation électrique de répéteur ($P_{10}$) de sorte qu'aucun courant ne soit prélevé par l'unité de répéteur (10).

10. Procédé de commande d'un dispositif (D, D'), lequel procédé comprend les étapes suivantes

- l'émission d'un signal de commande (35) à partir d'une unité de commande à distance (30) sous forme d'un rayonnement électromagnétique ($EM_1$) ;
- la détection d'un rayonnement électromagnétique ($EM_1$, $EM_2$) avec une unité de réception de répéteur (12) dans une unité de répéteur (10) pour obtenir un signal de réception de répéteur (11) ;
- la conversion passive du signal de réception de répéteur (11) en un signal d'actionnement de commutateur de répéteur (13) ;
- l'actionnement d'un commutateur de répéteur ($S_{10}$) de l'unité de répéteur (10) en utilisant le signal d'actionnement de commutateur de répéteur (13) pour commuter l'unité de répéteur (10) entre un mode inactif, dans lequel l'unité de répéteur (10) est complètement déconnectée d'une alimentation électrique de répéteur ($P_{10}$) de sorte qu'aucun courant ne soit prélevé par l'unité de répéteur (10), et un mode de fonctionnement, dans lequel un courant est prélevé à partir de l'alimentation électrique de répéteur

($P_{10}$) par l'unité de répéteur (10) ;

- l'utilisation de l'alimentation électrique de répéteur ($P_{10}$) pour entraîner un module de signal (14) de l'unité de répéteur (10) sur la base du signal de réception de répéteur (11) pour générer un signal d'émission de répéteur (15) ;
- l'émission du signal d'émission de répéteur (15) sous forme d'un rayonnement électromagnétique ($EM_2$, $EM_2'$) au moyen d'une interface d'émission de répéteur ($T_{10}$) de l'unité de répéteur (10) ;
et
- la détection du rayonnement électromagnétique ($EM_2$, $EM_2'$) émis par l'interface d'émission de répéteur ($T_{10}$) avec une unité d'interface de commande à distance (20) du dispositif à commander (D, D') pour obtenir un signal de réception de dispositif (21).

11. Procédé selon la revendication 10, dans lequel le dispositif à commander (D, D') comprend une alimentation électrique de dispositif ($P_{20}$) et un commutateur d'alimentation de dispositif ($S_{20}$), et l'étape d'actionnement du commutateur d'alimentation de dispositif ($S_{20}$) du dispositif à commander (D, D') comprend la conversion passive du signal de réception de dispositif (21) en un signal d'actionnement de commutateur de dispositif (23) et l'actionnement du commutateur ($S_{20}$) en utilisant le signal d'actionnement de commutateur de dispositif (23) pour commuter le dispositif (D, D') entre un mode de fonctionnement, dans lequel un courant est prélevé à partir de l'alimentation électrique de dispositif ($P_{20}$) par le dispositif (D, D') en fonctionnement, et un mode inactif, dans lequel le dispositif (D, D') est complètement déconnecté de l'alimentation électrique de dispositif ($P_{20}$) de sorte qu'aucun courant ne soit prélevé par le dispositif (D, D').

12. Procédé selon la revendication 10 ou 11, dans lequel un signal (15, 35) à émettre comprend un signal haute fréquence (15, 35) dans une bande de fréquence ISM.

13. Procédé selon l'une quelconque des revendications 10 à 12, dans lequel un signal (15, 35) à émettre est généré sur la base d'un code d'identification de dispositif, lequel code d'identification de dispositif est associé à un dispositif spécifique à commander (D, D').

14. Procédé selon la revendication 13, dans lequel un signal de réception de dispositif (21) est décodé pour déterminer un code d'identification de dispositif, et un commutateur ($S_{20}$) d'un dispositif à commander (D, D') est actionné sur la base du code d'identification de dispositif.

# FIG. 1
## (prior art)

# FIG. 2

**FIG. 3**

**FIG. 4**

FIG. 5

FIG. 6

FIG. 7a

FIG. 7b

FIG. 8a

FIG. 8b

# FIG. 9a

# FIG. 9b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070139214 A1
- EP 1857911 A1
- US 20060101298 A1
- WO 2005086281 A1